# EUROPEAN PATENT SPECIFICATION

(11) **EP 2 392 134 B1**
(45) Date of publication and mention of the grant of the patent: **09.12.2020**
(21) Application number: 09787633.8
(22) Date of filing: 28.01.2009
(51) Int. Cl.: H04N 7/10

(54) **METHOD FOR ASSIGNING A COMMUNICATION CHANNEL BETWEEN A LOW-NOISE BLOCK AND A SET-TOP BOX IN A DOMESTIC TELEVISION SYSTEM**
VERFAHREN ZUM ERTEILEN EINEN KOMMUNIKATIONSKANAL ZWISCHEN EINEM LOW-NOISE BLOCK UND EINEM SET-TOP BOX IN EINEM HEIMFERNSEHSYSTEM
PROCÉDÉ D'ATTRIBUTION D'UN CANAL DE COMMUNICATION ENTRE UN BLOC À BAS BRUIT ET UN BOÎTIER DÉCODEUR DANS UN SYSTÈME DE TÉLÉVISION DOMESTIQUE

(43) Date of publication of application: 07.12.2011
(73) Proprietor: Sky Italia S.r.L., 00138 Roma (IT)
(72) Inventor: FENOGLIO, Enzo, I-10082 Cuorgne' (Torino) (IT)
(74) Representative: Hoffmann Eitle
(86) International application number: PCT/IT2009/000020
(87) International publication number: WO 2010/086884

(56) References cited:
- EP-A- 1 418 760
- WO-A-98/24229
- US-B1- 6 189 148
- TOM CHRISTOPHORY: IP BASIERTE HEIMVERNETZUNG, XP002561004 24-04-2007 Retrieved from the Internet: URL:http://www.homeplane.de/files/aw_chris tophory_astra.pdf>
- BAXTER T: "VIDEO DISTRIBUTION IN THE EUREKA-IHS NETWORK", IEEE TRANSACTIONS ON CONSUMER ELECTRONICS, IEEE SERVICE CENTER, NEW YORK, NY, US, vol. 34, no. 3, 1 August 1988 (1988-08-01) , pages 736-743, XP000098394, ISSN: 0098-3063, DOI: 10.1109/30.20178

## Description

The present invention relates to a method for assigning a communication channel between a low-noise block and a set-top box in a domestic television system.

More specifically, the invention relates to a method for assigning a communication channel for a single cable reception (SCR) architecture for single or multiple dwelling units, to enable a multi-tuner or multiple set-top box (STB) unit to control peripheral devices connected to a single coaxial cable. More specifically, single dwelling units are single-family houses in which the STB units are located, while multiple units are apartment buildings in which a plurality of separate apartments is provided with STB units.

A STB unit can be a television tuner, a decoder, or an integrated receiver and decoder (IRD). In order to operate correctly, a STB unit of the decoder type must have its tuner connected via a coaxial cable to a LNB (low-noise block) circuit of a parabolic antenna. The parabolic antenna, and particularly the LNB circuit, receives a satellite signal carrying a plurality of television and/or radio programmes. This satellite signal is handled by the LNB circuit and is subsequently sent to the tuners of the various STB units connected to the antenna.

Up to the present time, SCR/DiSEqC (Digital Satellite Equipment Control) technology has been used to control STB units. This technology was introduced to simplify the installation by enabling signals for multiple tuners to be carried on a single coaxial cable running from an antenna to single STB units or DVR (digital video recorder) devices. Thus this technology enables a plurality of tuners to share a single coaxial cable.

Typically, a DVR device contains two tuners, each of which requires a corresponding coaxial cable for connection to the antenna, while dual DVR devices and/or multiple STB units may require more than two tuners each. By using the SCR/DiSEqC technology, therefore, it is possible to serve a plurality of STB units or DVR devices with a single coaxial cable, by sending signals corresponding to the desired television or radio programmes to these units or devices.

The typical installation configuration includes a parabolic antenna having an LNB circuit to which a single coaxial cable is connected, the incoming radio frequency signal being split by means of conventional splitters into a plurality of signals which are assigned to different tuners, each tuner being tuned to a corresponding frequency sub-band. The signals corresponding to the television or radio programmes required by the various STB units or DVR devices are transmitted in each sub-band. Thus the installation of multiple cables is avoided, and savings can be made.

Low-power silicon integrated circuits are known, which are subsystems of the LNB circuits of parabolic antennae and which use the SCR/DiSEqC technology. Each integrated circuit can shift the frequency of an incoming satellite signal to a fixed intermediate frequency associated with a predetermined sub-band: this makes it possible to extract a plurality of signals, each corresponding to a television or radio programme, from the satellite signal, and to send each signal in the associated sub-band to a specified tuner. These signals are carried on the single coaxial cable running from the LNB circuit and are sent to a plurality of tuners in one or more STB units.

However, this technology has a number of drawbacks. The first disadvantage is related to the problem of collision: the SCR/DiSEqC technology implements a multiple master-single slave architecture, and therefore collisions may occur between the different DiSEqC control sequences sent by different STB units. Furthermore, the time required to transmit the 5 bytes of a DiSEqC command is about 100 ms, a rather long time interval which can easily give rise to collisions between consecutive signals. Consequently, the SCR/DiSEqC technology cannot handle more than four separate signals in a single coaxial cable, and the largest configuration is therefore limited to four tuners, which is suitable for single units only, not for multiple units.

The second problem is due to the fact that it is not always possible to send DiSEqC commands, which are direct current signals, in previously installed systems, since these systems commonly include isolating transformers or reactive loads which adversely affect the transmission of DiSEqC signals.

Finally, the power consumption for an SCR/DiSEqC system is very high.

A known way of overcoming the aforementioned problems is to use FSK (Frequency Shift Key) modulation. This makes it possible to use a higher-frequency carrier, and therefore shorter data packets, than those used in the SCR/DiSEqC technology.

This simultaneous transmission method is described in patent application EP 1 833 250. This transmission method uses a plurality of FSK (FDMA) transmitters, each transmitter being associated with a corresponding STB unit in the 29-45 MHz band, and a plurality of FSK receivers, associated with the LNB circuit and each one specific to each STB unit. The LNB circuit receives the satellite signal from the parabolic antenna and converts it to intermediate frequency bands in the range from 950 to 2,150 MHz. Each FSK transmitter can send a request signal corresponding to a television or radio programme which is to be received, said programme being identified by respective frequency, band and polarization; this request signal is received by the associated FSK receiver which sends it to the LNB circuit for the purpose of selecting the desired programme within the satellite signal.

The method described in patent application EP 1 833 250 has a number of drawbacks. In the first place, the use of FSK modulation combined with an FDMA transmission method is complicated and expensive; furthermore, it is necessary to use external dongles for encoding the commands used to control the STB units into FSK modulation for communication with the LNB circuit, and vice versa.

This introduces a degree of complexity into the system and gives rise to additional costs due to the use of the FDMA method to avoid the collision problem. Furthermore, the installation of the STB units requires manual configuration of the frequency converter devices in the LNB circuit in order to associate each STB unit with a predetermined intermediate frequency.

An object of the present invention is therefore to propose a method for assigning a communication channel between a LNB circuit and a STB unit which enables the LNB circuit to handle multiple units, while avoiding the aforementioned collision problems, and which obviates the need for manual installation of the STB units.

These and other objects are achieved by a method for assigning a communication channel whose features are defined in Claim 1.

Particular examples are the subject of the dependent claims, whose content is to be understood as integral and integrating part of the present description.

Briefly, the system according to the invention can handle more than four separate tuners, and specifically up to twelve tuners, using a single coaxial cable running from an LNB circuit of a parabolic antenna. This makes it possible to handle up to twelve separate users, each having a simple STB unit of the decoder type, or up to six users if each uses a DVR device (with two tuners), or up to four users if each uses a simple STB unit of the decoder type and a DVR device. Therefore, the system according to the invention is able to handle up to four dwelling units, in a configuration having the maximum number of tuners per dwelling unit, with a single coaxial cable.

Alternatively, it is possible to increase the number of tuners that can be handled by the system according to the invention; more specifically, it is possible to handle up to thirty-one separate tuners.

Alternatively, it is possible to have a software-configurable service channel, in other words a channel over which the STB units are automatically switched when in the standby state, to limit power consumption or to facilitate the automatic updating of software resident in the STB units. In this case, a maximum of eleven separate tuners can be handled with a single coaxial cable.

The method according to the invention allows collision problems to be avoided by using FSK (Frequency Shift Key) modulation with time division multiple access (TDMA). This makes it possible to use a higher-frequency carrier, and shorter data packets, than those used in the SCR/DiSEqC technology.

Further features and advantages of the invention will become apparent from the following description, provided purely by way of a non-limiting example, with reference to the accompanying drawings, in which:
- Figure 1 is a block diagram of a system arranged to perform a method according to the invention;
- Figure 2 is a schematic representation of the ISO/OSI model;
- Figure 3 is a flow chart of the operations performed to assign an identification slot to an STB; and
- Figure 4 is a flow chart of the operations performed to re-use an identification slot previously assigned to a STB.

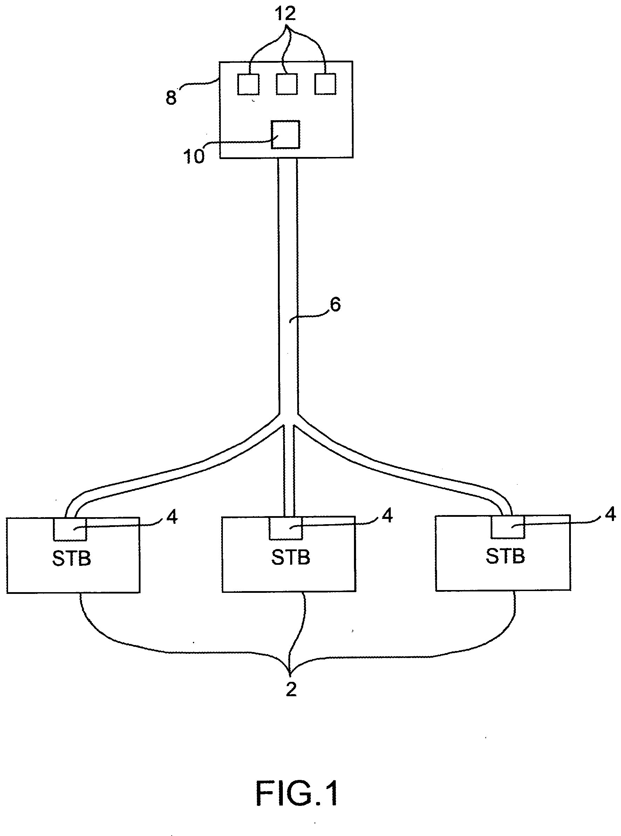

Figure 1 shows a block diagram of a system arranged to perform the method according to the invention. The system comprises a plurality of STB units 2, each STB unit 2 comprising a FSK transceiver 4, of a known type, arranged to send and receive request signals and programme signals, respectively, via a coaxial cable 6.

The request signal comprises tuning data indicating the band, polarization and frequency of the signal corresponding to the desired television or radio programme. The coaxial cable 6 is connected to an LNB circuit 8 which comprises an FSK transceiver 10, arranged to receive a request signal sent from a STB unit 2, to select the desired programme transmitted by a satellite signal from among those received by the LNB circuit 8, and arranged to send it to one of the STB units 2. In particular, the satellite signal is received by a plurality of frequency converter devices 12 of a known type, each of which is associated with a corresponding STB unit 2, these devices being arranged to shift the satellite signal to intermediate frequency bands corresponding to channels associated with said STB units 2. When the FSK transceiver 10 receives the request signal, the programme signal corresponding to the desired programme is selected and is sent to the STB units 2, using the channels corresponding to said STB units 2.

For compatibility with STB units 2 which do not have FSK transceivers 4, an external dongle device is provided, this device being connected to the STB unit 2 and being adapted to convert a tuning datum carried by a conventional DiSEqC signal to an FSK signal. The operation of this external dongle is equivalent to the operation of an STB unit 2 comprising a FSK transceiver 4.

The method according to the invention can be used for dynamic configuration between the LNB circuit 8 and the STB unit 2 and is similar to the DHCP protocol used to configure Internet hosts. The method according to the present invention was introduced to provide STB units 2 with configuration parameters according to the same procedure used in the DHCP for the dynamic assignment of network addresses. More specifically, the syntactic associations shown in Table 1 were created, based on RFC2131 which describes network address assignment procedures.

**Table 1.**

| **DHCP** | **Method according to the invention** |
|---|---|
| DHCP client | STB |
| DHCP server | LNB |
| STB HW address | STB S/N |
| STB IP address | Identification slot |
| IP address allocation | Dynamic allocation of identification slot |
| Subnet | MDU |
| Multiple clients | Multiple STBs |
| Single server | Single LNB |

Briefly, the method according to the invention comprises a set of operations for associating an identification slot with each STB unit 2; said slot is represented by a progressive identification number associated with a predetermined communication channel, in other words a sub-band of the total frequency band supported by the coaxial cable 6, said sub-band being represented by an associated intermediate frequency.

After this association has been created, the communication between the STB units 2 and the LNB circuit 8 can be distributed in broadcast mode between the LNB circuit 8 and the STB units 2 and in unicast mode between the STB units 2 and the LNB circuit 8; indeed, the STB units 2 are not allowed to exchange messages each other. This communication takes place in a known way.

Thus the method according to the invention enables each STB unit 2 to identify its own channel for communication with the LNB circuit 8 without any need for intervention by the user or an installer. This means that it is no longer necessary to manually configure the frequency converter devices 12 in the LNB 8 circuit in order to associate each STB unit 2 with a dedicated channel for communication with the LNB circuit 8, and consequently the configuration operation becomes faster and more reliable.

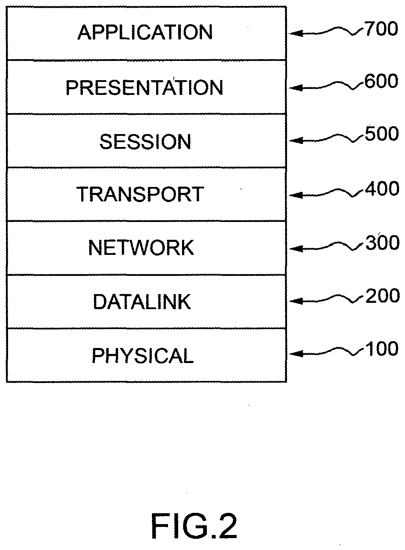

Figure 2 shows the known layout of the ISO/OSI model for implementing the method according to the invention. The ISO/OSI model is a stack of layers which serves to reduce the complexity of a communication system. More specifically, the ISO/OSI model is composed of layers, or levels, including one or more interrelated aspects of the communication between two elements of a network. The levels of interconnection are a physical layer 100, a data link layer 200, the network layer 300, the transport layer 400, the session layer 500, the presentation layer 600 and the application layer 700.

The method according to the invention provides specifications for four layers: the physical layer (PHY) 100, the data link layer (DLL) 200, the network layer (NET) 300 and the application layer (APP) 700.

The physical layer 100 is concerned with the transmission of bits in a communication channel. The STB units 2 and the LNB circuit 8 use a FSK modulation, preferably in the 3 MHz to 10 MHz band, as the physical layer. The messages from a STB unit 2 to the LNB circuit 8 are sent and carried in half duplex on an uplink carrier frequency, while the messages from the LNB circuit 8 to the STB units 2 are carried on a downlink carrier frequency. Advantageously, the uplink frequency is 6.5 MHz and the downlink frequency is 4.5 MHz.

The data link layer 200 is achieved by the exchange of messages between the STB units 2 and the LNB circuit 8, based on the ETSI TS 101 964 standard and using a serial structure, with or without parity, of a known type, present in the FSK transceivers 4, 10 associated with the STB units 2 and the LNB circuit 8 respectively. The messages have a predetermined fixed length to optimize the message traffic.

The data link layer 200 of the method according to the invention is structured in such a way that each retransmission request is handled by the higher layers, while this layer executes an error check on the transmitted data.

The network layer 300 defines the mechanism by which an identification slot is assigned to each STB unit 2, enabling these slots to be re-assigned to different STB units 2 at different instants: this provides TDMA communication channel handling. The messages exchanged in the network layer contain said identification slot in such a way that each message reaches the correct STB unit 2 and the LNB circuit 8 recognizes the STB unit 2 from which a given message has been sent.

All the messages exchanged by the network layer must therefore include the same identification slot for each STB unit 2.

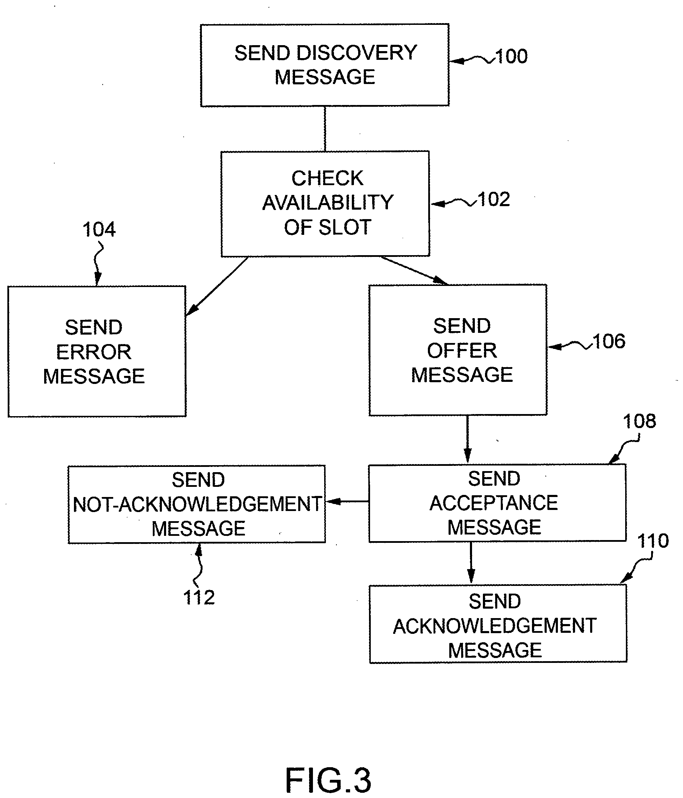

Figure 3 shows a flow chart of the operations executed to assign this identification slot to said STB unit 2. Advantageously, this identification slot comprises an identification number of the slot.

Each STB unit 2 is associated with a transmission identifier which may be either the serial number of the STB unit 2 (STB S/N in Table 1) or the identifier of a smart card inserted into said STB unit 2.

At this point in the description, it will be assumed that the LNB circuit 8 has a set of available identification slots, and can choose one of these to meet a new slot request from the STB unit 2. The LNB circuit 8 stores in a memory a database of allocated and released slots.

When an STB unit 2 sends a request to the LNB circuit 8, it inserts its own transmission identifier into the message; when the LNB circuit 8 answers, it inserts the same transmission identifier into the answer message. Only the STB unit 2 whose transmission identifier is the same as that present in the answer message will take into account the message from the LNB circuit 8; the other STB units 2 will disregard it.

The procedure of assigning a slot to a STB unit 2 starts at step 100 with the sending of a discovery message by a STB unit 2 which wishes to acquire an identification slot, said discovery message being sent to the LNB circuit 8 on the uplink frequency.

When it receives said discovery message, the LNB circuit 8 checks, in step 102, for the availability of a slot. If no slot is available, the LNB circuit 8 sends an error message in step 104 to notify the STB unit 2 that there are no slots available for a new installation.

If a slot is available, then in step 106 the LNB circuit 8 sends to the STB unit 2, on the downlink frequency, a message offering said slot and including the identification number of the slot.

At this point, in step 108, the STB unit 2 sends an acceptance message to the LNB circuit 8, using the uplink frequency, indicating that the STB unit 2 has accepted the slot that was offered to it.

After sending the slot offer message, the LNB circuit 8 starts a timer: if the STB unit 2 sends an acceptance message within the time interval determined by the timer, the configuration procedure continues as described below; otherwise, the slot is considered to be available again, and the assignment procedure is interrupted.

If the LNB circuit 8 receives a new discovery message from the STB unit 2, the LNB circuit 8 offers the STB unit 2 a new slot, since the STB unit 2 has refused the slot assigned to it previously.

If the LNB circuit 8 receives the acceptance message, it replies, in step 110, with an acknowledgement message, preferably including the identification number of the slot. Advantageously, this acknowledgement message also contains a data element representing the total period of use of the slot, preferably equal to two months.

From this point onwards, the STB unit 2 can send one or more request messages to the LNB circuit 8, each message comprising tuning data indicating the band, polarization and frequency of the signal corresponding to a desired television or radio programme. The LNB circuit 8 will send the programme signals corresponding to the requested programmes to the STB unit 2.

Whenever the LNB circuit 8 receives a request message, it updates the period of use of the slot, which is returned to a predetermined initial value, for example two months; this means that the slot can again be used by the STB unit 2 for the whole of this period of use.

If, after receiving a given request message, the LNB circuit 8 receives no new request message throughout the period of use, the LNB circuit 8 cancels the assignment of the slot to the STB unit 2 and the slot is considered to be newly available.

If the LNB circuit 8 receives the acceptance message in step 108 but is unable to assign the slot to the STB unit 2, it sends a not-acknowledgement message in step 112, to notify the STB unit 2 that the installation has not been completed correctly. The STB unit 2 can therefore send a new discovery message.

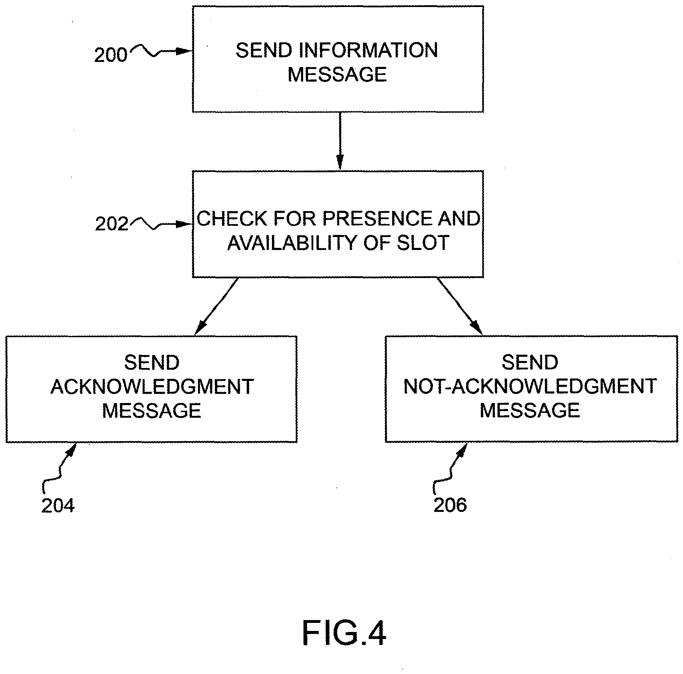

Figure 4 shows a flow chart of the operations executed by an STB unit 2 after the expiry of the period of use of the slot assigned to it previously, if it wishes to attempt to re-use the slot.

The procedure of re-using a slot assigned to an STB unit 2 starts with the sending, in step 200, of an information message from an STB unit 2 which requests a preceding slot which was assigned to it previously.

In step 202, the LNB circuit 8 checks if the slot is present in the memory and if it is not now being used by another STB unit 2.

If the slot is available, then in step 204 the LNB circuit 8 sends an acknowledgement message, preferably including the identification number of the slot. Advantageously, this acknowledgement message also contains a datum representing the total period of use of the slot, preferably equal to two months.

From this point onwards, the STB unit 2 can send one or more request messages to the LNB circuit 8, each message comprising tuning data indicating the band, polarization and frequency of the signal corresponding to a desired television or radio programme. The LNB circuit 8 will send the programme signals corresponding to the requested programmes to the STB unit 2.

Whenever the LNB circuit 8 receives a request message, it updates the period of use of the slot, which is returned to a predetermined initial value, for example two months; this means that the slot can again be used by the STB unit 2 for the whole of this period of use.

If the LNB circuit 8 finds in step 202 that the slot is not available, it sends a not-acknowledgement message to the STB unit 2, in step 206, to notify it that the configuration process was not successfully completed because the slot is not present in the memory of the LNB circuit 8 or is temporarily in use by another STB unit 2. The STB unit 2 can therefore send a new discovery message.

The application layer 700, more specifically the Electronic Program Guide (EPG), provides a user interface with different installation selection options, and receives the identification slot from the lower layers and associates them with a frequency range for transmission. The channels of the LNB circuit 8 are identified by means of progressive numbers, each of which is associated with a predetermined frequency range by using a plurality of filters, each associated with a corresponding frequency converter device 12.

In conclusion, if the differences and advantages of the present invention with respect to the SCR/DiSEqC technology are examined, it can be noted that the method according to the invention makes it possible to handle up to four orbital locations, is preferably capable of handling up to thirty-one tuners, handles collisions by means of a TDMA system, arid allows the different STB units to be installed automatically.

Clearly, the principle of the invention remaining the same, the examples and the details of production can be varied considerably from what has been described and illustrated purely by way of non-limiting example, without thereby departing from the scope of protection of the invention as defined in the attached claims.

## Claims

1. Method for dynamically assigning a communication channel in a single coaxial cable (6) between a low-noise block circuit (8) of a parabolic antenna and at least one set-top box unit (2) in a domestic television system, in which said low-noise block circuit (8) is associated with a plurality of communication channels in said single coaxial cable (6), each of said communication channels being arranged to carry programme signals at a respective intermediate frequency, the method comprising the following operations:
associating the set-top box unit (2) and the low-noise block circuit (8) with a respective FSK transceiver (4, 10) for transmitting and receiving messages using FSK modulation;
exchanging a plurality of channel assignment messages between the set-top box unit (2) and the low-noise block circuit (8), by means of respective transceivers (4, 10), in such a way that a channel identifier is automatically assigned to said set-top box (2) for identifying one of said plurality of communication channels in said single coaxial cable (6) for the transmission of a programme signal between said set-top box unit (2) and said low-noise block circuit (8),
wherein said channel identifier is dynamically associated with said set-top box unit (2) and is associated with a sub-band of a total frequency band supported by the coaxial cable (6);
the method further comprising the steps of:
sending (100) from the set-top box unit (2) to the low-noise block circuit (8) a first message representing a request for the acquisition of a channel identifier, wherein the first message includes a transmission identifier uniquely associated with the set-top box unit (2);
sending (106) from the low-noise block circuit (8) to the set-top box unit (2) a second message representing an offer of a channel identifier, wherein the second message includes the transmission identifier;
wherein the low-noise block circuit (8) starts a timer, after sending the second message;
sending (108) from the set-top box unit (2) to the low-noise block circuit (8) a third message representing the acceptance of said channel identifier;
wherein, if the third message is not sent within a time interval determined by the timer, the channel identifier is considered to be available again,
if the third message is sent within the time interval, sending (110), from the low-noise block circuit (8) to the set-top box unit (2) a fourth message of confirmation representing the correct completion of the dynamic assignment.

2. Method according to claim 1, in which said fourth confirmation message contains a datum representing the total period of use of the channel identifier by said set-top box unit (2).

3. System for dynamically assigning a communication channel in a single coaxial cable (6) between a low-noise block circuit (8) of a parabolic antenna and at least one set-top box unit (2) in a domestic television system, in which said low-noise block circuit (8) is associated with a plurality of communication channels in said single coaxial cable (6), each of said communication channels being arranged to carry programme signals at a respective intermediate frequency, the system comprising the following means:
means for associating the set-top box unit (2) and the low-noise block circuit (8) with a respective FSK transceiver (4, 10) for transmitting and receiving messages using FSK modulation;
means for exchanging a plurality of channel assignment messages between the set-top box unit (2) and the low-noise block circuit (8), by means of respective transceivers (4, 10), in such a way that a channel identifier is automatically assigned to said set-top box (2) for identifying one of said plurality of communication channels in said single coaxial cable (6) for the transmission of a programme signal between said set-top box unit (2) and said low-noise block circuit (8),
wherein said channel identifier is dynamically associated with said set-top box unit (2) and is associated with a sub-band of a total frequency band supported by the coaxial cable (6);
wherein the means for exchanging a plurality of channel assignment messages between the set-top box unit (2) and the low-noise block circuit (8) are configured to perform the following steps:
sending (100) from the set-top box unit (2) to the low-noise block circuit (8) a first message representing a request for the acquisition of a channel identifier wherein the first message includes a transmission identifier uniquely associated with the set-top box unit (2);
sending (106) from the low-noise block circuit (8) to the set-top box unit (2) a second message representing an offer of a channel identifier wherein the second message includes the transmission identifier;
wherein the low-noise block circuit (8) is configured to start a timer, after sending the second message;
sending (108) from the set-top box unit (2) to the low-noise block circuit (8) a third message representing the acceptance of said channel identifier, wherein, if the third message is not sent within a time interval determined by the timer, the channel identifier is considered to be available again,
if the third message is sent within the time interval, sending (110) from the low-noise block circuit (8) to the set-top box unit (2) a fourth message of confirmation representing the correct completion of the dynamic assignment.

4. Low-noise block circuit (8) of a parabolic antenna, comprising:
a memory for storing a database of allocated and released channel identifiers;
means for receiving a discovery message from a set-top box unit (2) representing a request for the acquisition of a channel identifier wherein the discovery message includes a transmission identifier associated with the set-top box unit (2);
means for sending a message to said set-top box unit (2) for offering a channel identifier for identifying one of a plurality of communication channels in a single coaxial cable (6), each of said communication channels being arranged for transmission of a programme signal between said set-top box unit (2) and said low-noise block circuit (8) at a respective intermediate frequency,
wherein the message for offering a channel identifier includes the transmission identifier,
means for starting a timer, after sending the second message;
means for receiving an acceptance message from a set-top box unit (2) representing the acceptance of said channel identifier,
wherein, the low-noise block circuit (8) is configured to consider the channel identifier to be available again, if the acceptance message is not received within a time interval determined by the timer,
means for sending a confirmation message of confirmation representing the correct completion of the association operation if the acceptance message is received within the time interval,
wherein said channel identifier is dynamically associated with said set-top- box unit (2) and is associated with a sub band of a total frequency band supported by the coaxial cable (6).

## Patentansprüche

1. Verfahren zum dynamischen Zuweisen eines Kommunikationskanals in einem einzelnen Koaxialkabel (6) zwischen einer rauscharmen Blockschaltung (8) einer Parabolantenne und mindestens einer Set-Top-Box-Einheit (2) in einem Heimfernsehsystem, in dem die rauscharme Blockschaltung (8) mit einer Vielzahl von Kommunikationskanälen in dem einzelnen Koaxialkabel (6) verknüpft ist, wobei jeder der Kommunikationskanäle angeordnet ist, Programmsignale bei einer entsprechenden Zwischenfrequenz zu tragen, das Verfahren umfassend die folgenden Betriebe:
Verknüpfen der Set-Top-Box-Einheit (2) und der rauscharmen Blockschaltung (8) mit einem entsprechenden FSK-Sendeempfänger (4, 10) zum Übertragen und Empfangen von Nachrichten unter Verwendung von FSK-Modulation;
Austauschen einer Vielzahl von Kanalzuweisungsnachrichten zwischen der Set-Top-Box-Einheit (2) und der rauscharmen Blockschaltung (8) durch entsprechende Sendeempfänger (4, 10) in einer derartigen Weise, dass eine Kanalkennung automatisch der Set-Top-Box (2) zugewiesen wird, um einen der Vielzahl von Kommunikationskanälen in dem einzelnen Koaxialkabel (6) zum Übertragen eines Programmsignals zwischen der Set-Top-Box-Einheit (2) und der rauscharmen Blockschaltung (8) zu identifizieren,
wobei die Kanalkennung dynamisch mit der Set-Top-Box-Einheit (2) verknüpft wird und mit einem Teilband eines Gesamtfrequenzbandes verknüpft wird, das von dem Koaxialkabel (6) unterstützt wird;
wobei das Verfahren weiter die Schritte umfasst:
Senden (100) einer ersten Nachricht von der Set-Top-Box-Einheit (2) an die rauscharme Blockschaltung (8), die eine Anfrage für die Erlangung einer Kanalkennung darstellt, wobei die erste Nachricht eine Übertragungskennung beinhaltet, die einzigartig mit der Set-Top-Box-Einheit (2) verknüpft ist;
Senden (106) einer zweiten Nachricht von der rauscharmen Blockschaltung (8) an die Set-Top-Box-Einheit (2), die ein Angebot einer Kanalkennung darstellt, wobei die zweite Nachricht die Übertragungskennung beinhaltet;
wobei die rauscharme Blockschaltung (8) nach Senden der zweiten Nachricht einen Zeitgeber startet;
Senden (108) einer dritten Nachricht von der Set-Top-Box-Einheit (2) an die rauscharme Blockschaltung (8), die die Akzeptanz der Kanalkennung darstellt;
wobei, wenn die dritte Nachricht nicht innerhalb eines Zeitintervalls gesendet wird, das durch den Zeitgeber bestimmt ist, die Kanalkennung wieder als verfügbar angesehen wird,
wenn die dritte Nachricht innerhalb des Zeitintervalls gesendet wird, Senden (110) einer vierten Bestätigungsnachricht von der rauscharmen Blockschaltung (8) an die Set-Top-Box-Einheit (2), die die korrekte Beendigung der dynamischen Zuweisung darstellt.

2. Verfahren nach Anspruch 1, in dem die vierte Bestätigungsnachricht ein Datum enthält, das die gesamte Verwendungsperiode der Kanalkennung durch die Set-Top-Box-Einheit (2) darstellt.

3. System zum dynamischen Zuweisen eines Kommunikationskanals in einem einzelnen Koaxialkabel (6) zwischen einer rauscharmen Blockschaltung (8) einer Parabolantenne und mindestens einer Set-Top-Box-Einheit (2) in einem Heimfernsehsystem, in dem die rauscharme Blockschaltung (8) mit einer Vielzahl von Kommunikationskanälen in dem einzelnen Koaxialkabel (6) verknüpft ist, wobei jeder der Kommunikationskanäle angeordnet ist, Programmsignale bei einer entsprechenden Zwischenfrequenz zu tragen, das System umfassend die folgenden Mittel:
Mittel zum Verknüpfen der Set-Top-Box-Einheit (2) und der rauscharmen Blockschaltung (8) mit einem entsprechenden FSK-Sendeempfänger (4, 10) zum Übertragen und Empfangen von Nachrichten unter Verwendung von FSK-Modulation;
Mittel zum Austauschen einer Vielzahl von Kanalzuweisungsnachrichten zwischen der Set-Top-Box-Einheit (2) und der rauscharmen Blockschaltung (8) durch entsprechende Sendeempfänger (4, 10) in einer derartigen Weise, dass eine Kanalkennung automatisch der Set-Top-Box (2) zugewiesen wird, um einen der Vielzahl von Kommunikationskanälen in dem einzelnen Koaxialkabel (6) zum Übertragen eines Programmsignals zwischen der Set-Top-Box-Einheit (2) und der rauscharmen Blockschaltung (8) zu identifizieren,
wobei die Kanalkennung dynamisch mit der Set-Top-Box-Einheit (2) verknüpft wird und mit einem Teilband eines Gesamtfrequenzbandes verknüpft wird, das von dem Koaxialkabel (6) unterstützt wird;
wobei die Mittel zum Austauschen einer Vielzahl von Kanalzuweisungsnachrichten zwischen der Set-Top-Box-Einheit (2) und der rauscharmen Blockschaltung (8) konfiguriert sind, die folgenden Schritte durchzuführen:
Senden (100) einer ersten Nachricht von der Set-Top-Box-Einheit (2) an die rauscharme Blockschaltung (8), die eine Anfrage für die Erlangung einer Kanalkennung darstellt, wobei die erste Nachricht eine Übertragungskennung beinhaltet, die einzigartig mit der Set-Top-Box-Einheit (2) verknüpft ist;
Senden (106) einer zweiten Nachricht von der rauscharmen Blockschaltung (8) an die Set-Top-Box-Einheit (2), die ein Angebot einer Kanalkennung darstellt, wobei die zweite Nachricht die Übertragungskennung beinhaltet;
wobei die rauscharme Blockschaltung (8) konfiguriert ist, nach Senden der zweiten Nachricht einen Zeitgeber zu starten;
Senden (108) einer dritten Nachricht von der Set-Top-Box-Einheit (2) an die rauscharme Blockschaltung (8), die die Akzeptanz der Kanalkennung darstellt, wobei, wenn die dritte Nachricht nicht innerhalb eines Zeitintervalls gesendet wird, das durch den Zeitgeber bestimmt ist, die Kanalkennung wieder als verfügbar angesehen wird,
wenn die dritte Nachricht innerhalb des Zeitintervalls gesendet wird, Senden (110) einer vierten Bestätigungsnachricht von der rauscharmen Blockschaltung (8) an die Set-Top-Box-Einheit (2), die die korrekte Beendigung der dynamischen Zuweisung darstellt.

4. Rauscharme Blockschaltung (8) einer Parabolantenne, umfassend:
einen Speicher zum Speichern einer Datenbank zugeordneter und freigegebener Kanalkennungen;
Mittel zum Empfangen einer Entdeckungsnachricht von einer Set-Top-Box-Einheit (2), die eine Anfrage für die Erlangung einer Kanalkennung darstellt, wobei die Entdeckungsnachricht eine Übertragungskennung beinhaltet, die mit der Set-Top-Box-Einheit (2) verknüpft ist;
Mittel zum Senden einer Nachricht an die Set-Top-Box-Einheit (2), um eine Kanalkennung zum Identifizieren eines einer Vielzahl von Kommunikationskanälen in einem einzelnen Koaxialkabel (6) anzubieten, wobei jeder der Kommunikationskanäle zur Übertragung eines Programmsignals zwischen der Set-Top-Box-Einheit (2) und der rauscharmen Blockschaltung (8) bei einer entsprechenden Zwischenfrequenz angeordnet ist, wobei die Nachricht zum Anbieten einer Kanalkennung die Übertragungskennung beinhaltet,
Mittel zum Starten eines Zeitgebers nach Senden der zweiten Nachricht;
Mittel zum Empfangen einer Akzeptanznachricht von einer Set-Top-Box-Einheit (2), die die Akzeptanz der Kanalkennung darstellt;
wobei die rauscharme Blockschaltung (8) konfiguriert ist, die Kanalkennung wieder als verfügbar anzusehen, wenn die Akzeptanznachricht nicht innerhalb eines Zeitintervalls empfangen wird, das von dem Zeitgeber bestimmt wird,
Mittel zum Senden einer Bestätigungsnachricht zur Bestätigung, die die korrekte Beendigung des Verknüpfungsbetriebs darstellt, wenn die Akzeptanznachricht innerhalb des Zeitintervalls empfangen wird,
wobei die Kanalkennung dynamisch mit der Set-Top-Box-Einheit (2) verknüpft ist und mit einem Teilband eines Gesamtfrequenzbandes verknüpft ist, das von dem Koaxialkabel (6) unterstützt wird.

## Revendications

1. Procédé d'attribution dynamique d'un canal de communication dans un câble coaxial unique (6) entre un circuit de bloc à bas bruit (8) d'une antenne parabolique et au moins une unité de boîtier décodeur (2) dans un système de télévision domestique, dans lequel ledit circuit de bloc à bas bruit (8) est associé à une pluralité de canaux de communication dans ledit câble coaxial unique (6), chacun desdits canaux de communication étant agencé pour transporter des signaux de programme à une fréquence intermédiaire respective, le procédé comprenant les opérations suivantes consistant à :
associer l'unité de boîtier décodeur (2) et le circuit de bloc à bas bruit (8) à un émetteur-récepteur FSK respectif (4, 10) pour transmettre et recevoir des messages en utilisant une modulation FSK ;
échanger une pluralité de messages d'attribution de canal entre le boîtier décodeur (2) et le circuit de bloc à bas bruit (8), au moyen d'émetteurs-récepteurs respectifs (4, 10), de telle sorte qu'un identifiant de canal soit automatiquement attribué audit boîtier décodeur (2) pour identifier l'un de ladite pluralité de canaux de communication dans ledit câble coaxial unique (6) pour la transmission d'un signal de programme entre ledit boîtier décodeur (2) et ledit circuit de bloc à bas bruit (8),
dans lequel ledit identifiant de canal est associé de manière dynamique à ladite unité de boîtier décodeur (2) et est associé à une sous-bande d'une bande de fréquence totale supportée par le câble coaxial (6) ;
le procédé comprenant en outre les étapes consistant à :
envoyer (100) depuis l'unité de boîtier décodeur (2) au circuit de bloc à bas bruit (8) un premier message représentant une demande d'acquisition d'un identifiant de canal, dans lequel le premier message inclut un identifiant de transmission uniquement associé à l'unité de boîtier décodeur (2) ;
envoyer (106) depuis le circuit de bloc à bas bruit (8) à l'unité de boîtier décodeur (2) un deuxième message représentant une offre d'un identifiant de canal, dans lequel le deuxième message inclut l'identifiant de transmission ;
dans lequel le circuit de bloc à bas bruit (8) démarre une minuterie, après avoir envoyé le deuxième message ;
envoyer (108) depuis l'unité de boîtier décodeur (2) au circuit de bloc à bas bruit (8) un troisième message représentant l'acceptation dudit identifiant de canal ;
dans lequel, si le troisième message n'est pas envoyé au sein d'un intervalle de temps déterminé par la minuterie, l'identifiant de canal est considéré être à nouveau disponible,
si le troisième message est envoyé au sein de l'intervalle de temps, envoyer (110), depuis le circuit de bloc à bas bruit (8) vers l'unité de boîtier décodeur (2) un quatrième message de confirmation représentant l'achèvement correct de l'attribution dynamique.

2. Procédé selon la revendication 1, dans lequel ledit quatrième message de confirmation contient une donnée représentant la période totale d'utilisation de l'identifiant de canal par ladite unité de boîtier décodeur (2).

3. Système d'attribution dynamique d'un canal de communication dans un câble coaxial unique (6) entre un circuit de bloc à bas bruit (8) d'une antenne parabolique et au moins une unité de boîtier décodeur (2) dans un système de télévision domestique, dans lequel ledit circuit de bloc à bas bruit (8) est associé à une pluralité de canaux de communication dans ledit câble coaxial unique (6), chacun desdits canaux de communication étant agencé pour transporter des signaux de programme à une fréquence intermédiaire respective, le système comprenant les moyens suivants :
des moyens pour associer l'unité de boîtier décodeur (2) et le circuit de bloc à bas bruit (8) à un émetteur-récepteur FSK respectif (4, 10) pour transmettre et recevoir des messages en utilisant une modulation FSK ;
des moyens pour échanger une pluralité de messages d'attribution de canal entre l'unité de boîtier décodeur (2) et le circuit de bloc à bas bruit (8), au moyen d'émetteurs-récepteurs respectifs (4, 10), de telle sorte qu'un identifiant de canal soit attribué automatiquement audit boîtier décodeur (2) pour identifier l'un de ladite pluralité de canaux de communication dans ledit câble coaxial unique (6) pour la transmission d'un signal de programme entre ladite unité de boîtier décodeur (2) et ledit circuit de bloc à bas bruit (8),
dans lequel ledit identifiant de canal est associé de manière dynamique à ladite unité de boîtier décodeur (2) et est associé à une sous-bande d'une bande de fréquence totale supportée par le câble coaxial (6) ;
dans lequel les moyens pour échanger une pluralité de messages d'attribution de canal entre l'unité de boîtier décodeur (2) et le circuit de bloc à bas bruit (8) sont configurés pour exécuter les étapes suivantes consistant à :
envoyer (100) depuis le boîtier décodeur (2) au circuit bloc à bas bruit (8) un premier message représentant une demande d'acquisition d'un identifiant de canal, dans lequel le premier message inclut un identifiant de transmission associé uniquement à l'unité de boîtier décodeur (2) ;
envoyer (106) depuis le circuit de bloc à bas bruit (8) à l'unité de boîtier décodeur (2) un deuxième message représentant une offre d'un identifiant de canal, dans lequel le deuxième message inclut l'identifiant de transmission ;
dans lequel le circuit de bloc à bas bruit (8) est configuré pour démarrer une minuterie, après avoir envoyé le deuxième message ;
envoyer (108) depuis l'unité de boîtier décodeur (2) au circuit de bloc à bas bruit (8) un troisième message représentant l'acceptation dudit identifiant de canal, dans lequel, si le troisième message n'est pas envoyé au sein d'un intervalle de temps déterminé par la minuterie, l'identifiant de canal est considéré être à nouveau disponible,
si le troisième message est envoyé au sein de l'intervalle de temps, envoyer (110) depuis le circuit de bloc à bas bruit (8) vers l'unité de boîtier décodeur (2) un quatrième message de confirmation représentant l'achèvement correct de l'attribution dynamique.

4. Circuit bloc à bas bruit (8) d'une antenne parabolique, comprenant :
une mémoire pour stocker une base de données d'identifiants de canal alloués et libérés ;
des moyens pour recevoir un message de découverte depuis une unité de boîtier décodeur (2) représentant une demande d'acquisition d'un identifiant de canal dans lequel le message de découverte inclut un identifiant de transmission associé à l'unité de boîtier décodeur (2) ;
des moyens pour envoyer un message à ladite unité de boîtier décodeur (2) pour offrir un identifiant de canal pour identifier l'un d'une pluralité de canaux de communication dans un câble coaxial unique (6), chacun desdits canaux de communication étant agencé pour une transmission d'un signal de programme entre ladite unité de boîtier décodeur (2) et ledit circuit de bloc à bas bruit (8) à une fréquence intermédiaire respective,
dans lequel le message pour offrir un identifiant de canal inclut l'identifiant de transmission,
des moyens pour démarrer une minuterie, après avoir envoyé le deuxième message ;
des moyens pour recevoir un message d'acceptation depuis une unité de boîtier décodeur (2) représentant l'acceptation dudit identifiant de canal,
dans lequel, le circuit de bloc à bas bruit (8) est configuré pour considérer que l'identifiant de canal est à nouveau disponible, si le message d'acceptation n'est pas reçu au sein d'un intervalle de temps déterminé par la minuterie,
des moyens pour envoyer un message de confirmation d'une confirmation représentant l'achèvement correct de l'opération d'association si le message d'acceptation est reçu au sein de l'intervalle de temps,
dans lequel ledit identifiant de canal est associé de manière dynamique à ladite unité de boîtier décodeur (2) et est associé à une sous-bande d'une bande de fréquence totale supportée par le câble coaxial (6).
